# EUROPEAN PATENT SPECIFICATION

(11) **EP 1 833 009 B1**
(45) Date of publication and mention of the grant of the patent: **08.05.2019**
(21) Application number: 06004895.6
(22) Date of filing: 09.03.2006
(51) Int. Cl.: G06Q 20/00, G06Q 20/38, H04L 9/06, H04L 9/08, H04L 29/06

(54) **SECURE TRANSACTION COMPUTER NETWORK**
COMPUTERNETZWERK FÜR SICHERE TRANSAKTIONEN
RESEAU INFORMATIQUE DE TRANSACTIONS SECURISEES

(43) Date of publication of application: 12.09.2007
(73) Proprietor: First Data Corporation, Greenwood Village, CO 80111 (US)
(72) Inventor: Kubo, Takayuki, 71083 Herrenberg (DE); Albrecht, Norbert, 16341 Panketal (DE)
(74) Representative: Schmidt, Steffen J.

(56) References cited:
- US-A1- 2004 120 528
- US-A1- 2005 036 624
- US-A1- 2005 078 826
- US-A1- 2005 172 137
- US-A1- 2005 259 825
- US-A1- 2005 286 723
- ELLIOTT C: "Building the quantum network" NEW JOURNAL OF PHYSICS, INSTITUTE OF PHYSICS PUBLISHING, BRISTOL, GB, vol. 4, 12 July 2002 (2002-07-12), pages 461-4612, XP002271991 ISSN: 1367-2630
- HRUBY J: "Smart-card with interferometric quantum cryptography device" CRYPTOGRAPHY: POLICY AND ALGORITHMS. INTERNATIONAL CONFERENCE. PROCEEDINGS, 1996, pages 282-289, XP009071592
- ELLIOTT C ET AL: "QUANTUM CRYPTOGRAPHY IN PRACTICE" COMPUTER COMMUNICATION REVIEW, ACM, NEW YORK, NY, US, vol. 33, no. 4, October 2003 (2003-10), pages 227-238, XP001224083 ISSN: 0146-4833

## Description

### FIELD OF THE INVENTION

The present invention relates to a secure transaction computer network. More particularly, the invention relates to a financial transaction network in which at least one first host computer system is at least temporarily connected to at least one second host computer system comprising one or more interlinked hosting platforms which are at least temporarily connected to at least one front end terminal. The connections between the first host computer system and each second host computer system, and between each second host computer system and each front end terminal are one or more optical fiber channels.

### BACKGROUND OF THE INVENTION

Financial transactions as encompassed by the present invention are mainly credit card or debit card payments at a POS (point of sale) terminal. The invention is, however, also applicable to other areas including different market such as mail order / telephone order involving businesses that conduct credit card transactions over the telephone or by mail (MOTO) or e-commerce, m-commerce and different payment methods such as electronic check authorization, and electronic fund transfer in general. In e-commerce or m-commerce scenarios, POS terminals are web-servers, and the functionality of the credit cards is represented by card numbers and typically additional information.

Typically, a card payment scenario involves four entities: (i) the cardholder, that is the customer who wants to effect a payment utilizing his / her debit card or credit card, (ii) the card issuing bank, where the customer holds an account or which totals the payments of the cardholding customer to debit the (e.g. monthly) total against his / her account held in another bank, (iii) the merchant from whom the customer wants to purchase a product / service, and (iv) the acquiring bank.

The issuing bank issues cards to cardholders, and the acquiring bank recruits merchants and maintains a card acceptance network including card acceptance POS terminals. Some card payment schemes might have a special situation in that the issuing bank and the acquiring bank are the one and the same institution. Hereinafter, such a case is not distinguished, since without loss of generality, their respective two functions can also be considered to be effected by such a "unified" bank.

The communication between the issuing bank and the acquiring bank is usually operated by a card payment scheme such as MAESTRO® VISA®, MasterCard®, or the like, for international credit card payments, or any national bank organization for domestic debit card payments. The acquiring bank and the merchants are connected via acquirer host - POS terminal (tele-)communication equipments and infrastructure. In some instances, there are third party payment service providers, who attend to the technical data processing for banks and/or maintain merchants' POS terminals. The roles of those payment service providers do not need to be specifically discussed as they can be considered to be outsourcing partners of the banks or merchants, instead.

The flow of data / information between the various entities related with a card payment is explained hereinafter with reference to Fig. A. When a cardholder purchases goods / services from a merchant and intends to pay with his / her card, the merchant initiates the card payment process at the POS terminal by entering the payment amount. Then the magnetic stripe of the card is swiped through the magnetic stripe reader of the POS terminal (or the IC chip of the card is read by the POS terminal). The POS terminal sends a corresponding authorization request to the issuer bank through the acquirer bank. If the issuer bank approves the request, the issuer bank sends back the transaction approval message to the POS terminal via the acquirer bank. Subsequently, the POS terminal prints a corresponding receipt for the cardholder to sign it. It is important to mention that POS terminals contain a specially certified hardware security module (HSM) that contains cryptographic algorithms and keys in a security enhanced hardware environment. A HSM typically contains at least one CPU / MPU that is independent from the POS terminal's CPU / MPU. Thus, POS terminals normally have two CPUs / MPUs in total. Furthermore, the acquirer's host and the issuer's host systems also have corresponding HSMs for the communication with their partners.

In order to better explain the enhanced security environment typical for financial service networks, reference is made to Fig. A. All entities involved encrypt and decrypt sensitive data / information communicated along the scheme's path of information flow by feeding / retrieving the data / information to / from the HSMs. Typically involved data are (i) PIN (Personal Identity Number), (ii) MAC (Message Authentication Code), (iii) the complete message itself, in case a low privacy environment such as the Internet provides the communication channel used for online payment scenarios, and (iv) card authentication data, (v) cardholder authentication data, and (vi) some type of digital evidence (e.g. transaction certificate) for offline payment scenarios.

In the financial industry, public key algorithms such as RSA and DSA, as well as private key algorithms such as triple DES (Data Encryption Standard) and AES (Advanced Encryption Standard) are the standard cryptographic algorithms utilized today. It is known that those algorithms are strong enough for a certain period of time. The challenge of private key algorithms is for sender and receiver to share a key while ensuring that no third party has a copy of that key.

Public key cryptography is often used to distribute the secret keys for encryption and decoding of a full-length message. The security of public-key cryptography depends on so-called one-way functions. The most common example of a one-way function is factorization. The RSA cipher algorithm, for example, relies on factorization. No efficient algorithm for factorization has ever been disclosed. There is, however, no formal proof that such an algorithm does not exist. It may not have been developed yet or it may have been kept secret. To compute the product of two large primes is easy. It is, however, time consuming to factor the product back into the primes. The secret key being transferred between sender and receiver is encrypted with a publicly available key, e.g., a large number such as 408 508 091. It can be decrypted only with a private key owned by the recipient of the data, made up of two factors, in this case 18 313 and 22 307. A public-key cipher may hold secret keys secure for some time. However, due to increased computational capacities becoming available, increased key lengths or new cryptographic algorithms are required frequently. Hence, the industry is updating those key lengths and the supporting cryptographic algorithms regularly.

Today, the industry has made large investments to establish public key infrastructures (PKIs) and continues to maintain such infrastructures. However, the fundamental security level of public key infrastructures is not yet proven mathematically. Once a higher hierarchy entity is compromised, all its subsidiaries are forced to change their keys immediately.

In the card payment scenarios explained above, this means that all POS terminals, all issuer and acquirer bank hosts and all payment service provider systems are equipped with the hardware security modules HSMs that are to be replaced in certain time intervals. Any key length and cryptographic algorithm updates directly relate to the exchange of the HSM throughout the payment process chain, unless a current HSM supports the new key length and new algorithms to be employed. In reality, the financial industry often faces cost- and labour intensive HSM replacements owed to longer key lengths or improved cryptographic algorithms.

One of the widely spread public key algorithms is RSA which relies on its key length as its fundamental operational unit. This means, even though only 4 or 6 Bytes of private information such as a PIN are to be communicated, the algorithm requires at least its key length size of transmitted data unit. For instance, 128 Byte (1024 bit key) or 512 Byte (4096 bit key) are required to securely communicate 4 or 6 Bytes of private information. This drawback is common to all the other public key algorithms utilized today.

Also private key algorithms such as triple-DES have a similar fundamental unit (block). Triple-DES use 112 bit key size. Hence, its block is 14 Byte.

It is evident that, given the relatively small amounts of information communicated in each encrypted message between the parties involved in the payment process, increasing block lengths significantly contribute to the cryptographic data traffic overhead those algorithms require, and the ratio of block size / private information size is deteriorating with the block length growing due to security requirements.

Public key cryptography is appropriate to ensure short-term confidentiality of data, but does not offer future-proof security. The only way to guarantee long-term security of critical data is to use secret key cryptography and to carefully manage and frequently refresh keys.

Quantum cryptography complements conventional cryptographic techniques to raise security of data transmission over optical fiber channel links to an unprecedented level. It exploits the laws of quantum physics to reveal the interception of information exchanged between two stations. In quantum cryptography, single photons are used to carry information over an optical fiber cable. By checking for the presence of disturbances, it is possible to verify if a transmission has been intercepted or not. Quantum physics guarantees that the interception of the single photons necessarily translates into perturbations which can be observed. This technology can be used to exchange keys between two remote sites connected by an optical fiber cable, and to confirm their secrecy. The keys are then used with secret key cryptographic algorithms to securely encrypt information. With such an approach, it is possible to guarantee future-proof data confidentiality based on the laws of quantum physics. Its deployment on critical links allows thus to raise the information security level of an organization.

The document US 2005/0078826 A1 relates to a quantum cryptography communication system including first, second and third data communication units. The first and the second data communication units and the second and the third data communication units are connected by optical fibres. In the first and the second data communication units a first shared key is generated. In the second and the third data communication units a second shared key is generated. The first shared key is encrypted by the second data communication unit by using the second shared key and is than transmitted to the third data communication unit.

The document US 2005/0172137 A1 discloses a key management technique for establishing a secure channel through an indeterminate number of nodes in a network. The technique comprises enrolling a smart card with a unique key per smart card in a public/private key system.

In the document US 2005/0259825 A1 key banking methods and systems for quantum key distribution are disclosed. The quantum key distribution system establishes two sets of keys associated with different security levels.

The document US 2004/0120528 A1 relates to distributing key material between nodes coupled to a network using quantum cryptographic techniques.

The document Elliot C, "Building the quantum network", New Journal of Physics, Institute of Physics Publishing, Bristol, GB, vol. 4, 12 July 2002 (2002-07-12), pages 46.1-46.10, XP002271991, ISSN: 1367-2630, relates to the application of quantum key distribution techniques within realistic, highly secure communications systems. The system taught in D5 provides a quantum cryptographically secured transmission between two private enclaves.

In the document Hruby J, "Smart-card with interferometric quantum cryptography device", Cryptography: Policy and Algorithms, International Conference Proceedings, 1996, pages 282-289, XP0090711592, a system is provided involving a quantum cryptographic smart-card and a quantum cryptographic teller machine. The quantum cryptographic smart-card includes a PIN activator, a microchip with an implemented cryptographic key, and a phase modulator for transforming the cryptographic key into optical signals.

### PROBLEM UNDERLYING THE INVENTION

The weakness of Public Key Cryptography resides in the fact that it is based on a hard mathematical problem (e.g. factorization), for which no scientific proof of security exists. To the contrary, such hard mathematical problems are vulnerable to the progress in computational capabilities such as supercomputers and algorithms.

### SUMMARY OF THE INVENTION

To overcome the drawbacks of the communications architectures and security paradigms outlined above, a secure transaction computer network, operating under the specific constraints of and meeting the specific requirements of the financial industry is devised. To this end, the invention relates to a financial transaction network in which at least one first host computer system is at least temporarily connected to at least one second host computer system comprising one or more interlinked hosting platforms which are at least temporarily connected to at least one front end terminal. The connections data and/or the key data between the first host computer system and each second host computer system, and between each second host computer system and each front end terminal is one or more optical fiber channel. The communication data and/or the key data between the first host computer system and the second host computer system is encrypted utilizing one time pad with a key shared by quantum key distribution. The communication between the second and the front end terminal is encrypted utilizing one time pad with a key shared by quantum key distribution. The second host computer system comprises an optical devices module for the communication between the second host computer system and the first host computer system and an optical devices module for the communication between the second host computer system and the front end terminal, wherein for the communication between the front end terminal and the first host computer system an optical channel is provided between the two optical devices modules present in the second host computer system.

The encrypting mechanism implemented between two computer systems / entities or between a computer system and a token / card including data exchanging/processing /storing functionality utilizing a one time pad with a key shared by quantum key distribution is termed "quantum encrypting" throughout this specification.

A one-time-pad is a truly random secret string K used in private key encryption shared by a sender (Alice) and receiver (Bob), called the "key". This key K is used by Alice to encrypt a message M from an Eavesdropper (Eve) during transmission and is used by Bob to decrypt the message M afterwards. Thus, a random n-bit key K is used to encrypt an n-bit message M. Alice sends a cipher-text C = M ⊕ K to Bob, where ⊕ denotes bitwise xor (addition modulo 2). Bob decodes C by calculating C ⊕ K = M. This cipher is absolutely secure because C is random and independent of M when and as long as K is truly random and unknown to Eve.

The critical issue of the one-time pad is that it must not be reused. Quantum key distribution provides a method to renew the key using just public transmissions plus the transmission of quantum bits. In quantum key distribution, Alice sends Bob a random sequence of quantum bits (or qubits). These qubits are equally likely to be in one of four possible states (the "State" column in the table):

| State | Basis | Value |
|---|---|---|
| \|0> | Z | 0 |
| \|1> | Z | 1 |
| 1/sqrt (2) (\|0) + \|1>) | X | 0 |
| 1/sqrt (2) (\|0) - \|1>) | X | 1 |

When Bob receives a qubit, Bob randomly chooses to measure it either in the Z basis or the X basis, and records the results. Bob now has a string of random bits. Then Alice announces which basis the state Alice sent came from (the "Basis" column in the table), but not what the state actually was, and Bob announces which basis Bob measured in. If Bob measured in the same basis as Alice used to prepare the state, Bob should have obtained the result in the "Value" column of the table. Alice and Bob keep the results for which they used the same basis and discard the other bits. In the absence of errors and eavesdropping, they should now have an identical string of bits, which can be used as their private key K.

During this key generation procedure by Alice and Bob, Eve may have intercepted the qubits being sent from Alice to Bob. However, any measurement Eve makes on a qubit to attempt to determine what it is will inevitably disturb its quantum state. If Eve happens to choose the same basis to measure in as Bob, Bob will not notice - Bob will get the same result as Eve, and the same result as if Eve had not done anything. However, Eve doesn't know what basis Bob will choose to measure in. If Eve measures in the X basis and Bob measures in the Z basis (or vice-versa), Bob's result will now be random - even if the original state was prepared in the Z basis. That means that if Alice and Bob compare notes about the value of this bit, half the time, their bits will be different when they should be the same. No matter what Eve does, errors will inevitably be introduced into Bob's key compared to Alice's key. By comparing some randomly chosen subset or combination of the bits in their keys, Alice and Bob can learn if Eve is attempting to listen in. The communications channel between Alice and Bob is not likely to be perfect, so a number of errors will appear even if Eve is not listening. But if the number of errors is significantly greater than expected, Alice and Bob can assume that Eve is the cause.

If Alice and Bob determine Eve is probably not present, Alice and Bob can terminate the procedure with some error correction protocol to eliminate any difference between their keys. The result will be a shared secret key K, which then can be used as a one-time pad.

### BRIEF DESCRIPTION OF THE DRAWINGS

Further details, embodiments, modifications or enhancements of the present invention may be obtained from consideration of the following description of various illustrative embodiments of the invention in conjunction with the drawings in which:
Fig. A is a schematic diagram illustrating the components of a financial transaction network usable in conjunction with the present invention;
Fig. B is a schematic diagram illustrating the system according to the present invention in a of a financial transaction network utilizing quantum cipher technology;
Fig. C1 is a schematic illustration of linear polarization states of photons used in the quantum cipher system of the present invention;
Fig. C2 is a schematic illustration of optical splitters used in the present invention;
Figs. C3 and C4 are schematic illustrations of the function of the splitters illustrated in Fig. C2;
Fig. D is a schematic illustration of on possible high quality random key generator usable with the present invention.

### DETAILED DESCRIPTION OF EMBODIMENTS OF THE INVENTION

Where appropriate, the same reference signs or designations will be used throughout this detailed description in conjunction with the drawings to refer to the same or like parts / components / functions.

Quantum cryptography solves the key distribution problem by allowing the exchange of a cryptographic key between two remote parties with absolute security. Thus, quantum key distribution and quantum cryptography are two terms for the same subject as long as a one time pad key is utilized. Quantum cryptography / quantum key distribution exploits the fact that merely observing a quantum object perturbs it in an irreparable way. If the value of a digital bit is encoded on a single quantum object, its interception will necessarily translate into a perturbation, because an eavesdropper is forced to observe it. This perturbation causes errors in the sequence of bits exchanged between a sender and a recipient. By checking for the presence of such errors, the two parties can verify whether their key was intercepted or not. This verification takes place after the exchange of bits. Hence, one finds out *a posteriori* whether the communication was eavesdropped or not. That is why this technology is used to exchange a key and not valuable information. Once the key is validated, it can be used to encrypt data. It can be proven that interception of the key without perturbation is impossible.

In conventional communications channels, data / information is communicated bitwise or in blocks of bits. For each bit of information, a (light) pulse is emitted and sent down the optical fiber channel to the receiver, where it is registered and transformed back into an electronic signal. In quantum cryptography, each of the pulses contains a single photon or another type of quantum object, e.g. an electron. A single photon can not be split into halves. This means that an eavesdropper cannot take half of a photon to measure the value of the bit it carries, while letting the other half continue its course. If the eavesdropper wants to obtain the value of the bit, he must observe the photon and will thus interrupt the communication and reveal his presence. One possible strategy is for the eavesdropper to detect the photon, register the value of the bit and prepare a new photon according to the obtained result to send it to the receiver. In quantum cryptography, the two legitimate parties cooperate to prevent the eavesdropper from doing so, by forcing him to introduce errors.

Today, several quantum cryptography protocols exist. Hereinafter, only one quantum cryptography protocol, that is the BB84 protocol, will be explained in further detail as specifically suited to implement the present invention. A transmitter and a receiver can implement the BB84 protocol by exchanging single photons, whose polarization states are used to encode bit values over an optical fiber.

The polarization of light is the direction of oscillation of the electromagnetic field associated with its wave. (see Fig. C1) Its orientation is perpendicular to the direction of its propagation. Linear polarization states can be defined by the direction of oscillation of the field. Horizontal and vertical orientations as well as diagonal orientations (+ 45° and - 45°) are usable examples of linear polarization states. Linear states can point in any direction. The polarization of a photon can be prepared in any of these states by utilizing polarization filters. A vertical polarization filter filters (i.e. allows to pass) only vertically polarized photons. A horizontal polarization filter allows to pass only horizontally polarized photons. A diagonal (45°) polarization filter allows to pass only diagonally (45°) polarized photons. A diagonal (-45°) polarization filter allows to pass to only diagonally (-45°) polarized photons.

Splitters exist to distinguish horizontal states from vertical ones (see Fig. C2). Vertical filters and horizontal filters are combined to allow a vertically or horizontally polarized photon going through it. A possible set-up to provide a splitter can be straightforward as follows: Along the injected photon direction, a vertical filter is provided downstream a half coated (semi transparent) silver mirror with 45 deg with respect to the photon injection direction. A photon will pass the mirror to the vertical filter with probability of ½. With a probability of ½, a photon will be reflected by the mirror perpendicularly to the photon injection direction. Here, a horizontal filter is provided. This is a set-up for a vertical - horizontal splitter. (See Fig. C2) Similarly, a diagonal splitter can be provided by utilizing diagonal filters instead of vertical and horizontal filters. When passing through such a splitter, the course of a vertically polarized photon is deflected to the right, while that of a horizontally polarized photon is reflected to the left (see Fig. C3). In order to distinguish between diagonally polarized photons, the splitter is to be rotated by 45° from its horizontal or vertical orientation. If a photon is sent through a splitter with the incorrect orientation - a diagonally polarized photon through a non-rotated (i.e. horizontal / vertical) splitter for example - it will be randomly reflected in one of the two directions (see Fig. C4). In this process, the photon also undergoes a transformation of its polarization state, so that it is impossible to know its orientation before the splitter.

The process of agreeing on / exchanging of a key is explained hereinafter. The optical fiber or any other medium capable of propagating photons without or with little de-coherence of the quantum states of the photon and the optical transmission (i.e. transmitter, receiver) equipment is called a quantum channel. The transmitter (Alice) and the receiver (Bob) utilize four different polarization states. They agree, for example, that a 0-bit value can be encoded both as a horizontal state and a -45° diagonal one. For a 1-bit value, they agree to utilize both, a vertical state and a +45° diagonal one. For each bit, Alice sends a photon whose polarization is randomly selected among the four states. Alice stores the orientation of the polarization states in a transmitter list. The photon is sent along the quantum channel. For each incoming photon, Bob randomly chooses the orientation - horizontal or diagonal - of a splitter allowing to distinguish between two polarization states. These orientations, as well as the outcome of the detections - photon is deflected to the right or goes straight - are recorded in a receiver list. After a sufficiently large number of photons have been exchanged, Bob reveals over a conventional communication channel the sequence of splitter orientations he has used to Alice, without disclosing the actual results of the measurements.

Alice uses this information to compare the orientation of the photons that were transmitted with the corresponding splitter orientation. Alice announces to Bob in which cases the orienttations where compatible and in which they were not. In a subsequent sifting phase, Alice and Bob discard from their respective lists all the bits corresponding to a photon for which the orientations were not compatible. Thus, both Alice and Bob each obtain a sequence of bits which, in the absence of Eve, is identical and is statistically half the length of the raw sequence. This sifted bit sequence is then to be used as a key.

Eve intercepting the photons will statistically, in half of the cases, use the wrong splitter. By doing so, the state of the photons is modified and errors in the sequence shared by the transmitter and receiver are introduced. To verify the integrity of the key, Alice and Bob only need to check for the presence of errors in the sequence, by comparing over the conventional channel a sample of the bits. The bits revealed during this comparison are discarded as they could have been intercepted by the eavesdropper. Any interception of the communications over the conventional channel by Eve does not constitute a vulnerability, as it would only happen after the transmission of the photons.
Step 1: Alice encodes a bit sequence and sends corresponding (single) photons to Bob.
Step 2: Bob sets-up the splitters.
Step 3: Bob's measurement of received photons.
Step 4: Bob informs Alice about the splitter set-up utilized when receiving the photons.
Step 5: Alice informs Bob which single photons used the same orthogonal basis.
Step 6: Alice and Bob keep the agreed photons only.
Step 7: Alice and Bob deduct Key.

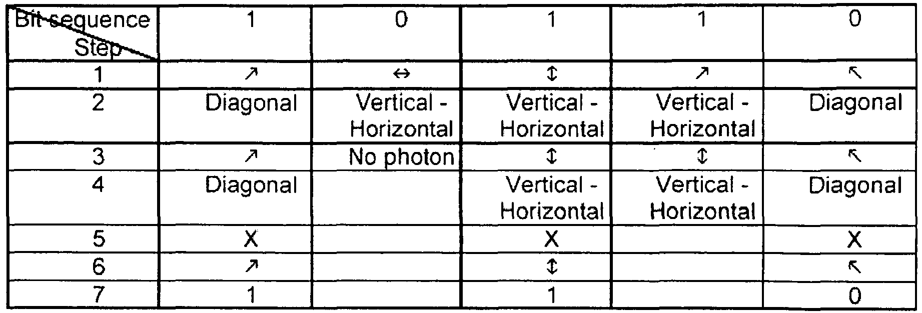

Another aspect of the invention resides in the use of specially generated keys. First of all, the keys utilized are exactly as long as the plain text (i.e. the data exchanged in the financial transaction). Hence, they can be relatively short (some 4 - 50 bytes), as the exchanged messages are also quite short.

Second, each key is used only once - this scheme is called the "one-time pad". Based on these two assumptions it can be shown that decryption is impossible and that the scheme is absolutely secure. Further, the key generation process preferably is such that it is impossible for a third party to guess or deduce the key used. To achieve this, high quality (close to or truly) random digits or numbers must thus be used as the key. In order to provide a high quality random bit sequence to the transmitter, the invention may be implemented using a semi-transparent mirror (see Fig. D). The probability that a photon is transmitted through the semi-transparent mirror is 0.5, and the probability that a photon is deflected by the semi-transparent mirror is also 0.5. Thus it is entirely impossible for an observer to predict the result obtained by the two sensors, of which the one senses the transmitted photons and the other one senses the deflected photons. Both sensors provide a respective electrical output signal. Both signals are fed into a shift register to aggregate the key. "True random" as used herein relies on a physical process instead of a computational process which would generate only pseudorandom key strings.

The present invention utilizes the approach that the first and the second host computer systems (i.e. the issuer host and the acquirer host) as well as the front end terminals (e.g. the POS terminals, ATMs, or the like) are currently equipped with conventional hardware security modules (HSM). Instead of the conventional HSMs, the present invention implements a quantum hardware security module (QHSM) which includes a quantum key distribution device, which generates random keys, and quantum communication devices as described above utilizing single photons to enable two parties (e.g. first - second host computer systems, and second host computer systems - front end terminals, respectively) to share actual one-time-key pads from previously generated random keys. The key is generated uniquely, i.e. as a one-time pad as a result of the exchange between A and B.

To this end, the invention is also related to a hardware security module including a quantum key distribution device, which generates random keys, and quantum communication components using single photons to enable two parties to share one time key pads from previously generated random keys.

A PIN (i.e. a 4 Byte or 6 Byte number, any biometric information digitalized in a common / standard format) is transmitted from the front end terminal to the second host computer system. The front end terminal and the second host computer system prepare the necessary one-time-pad key using the QKD protocol between them.

Subsequently, the front end terminal encrypts the PIN with the one-time-pad using the generated key. As described above, the keys are generated by the QKD protocol and are communicated over the fiber channel between the front end terminal (POS terminal's HSM) QHSD and the second host computer system (acquirer's host's) QHSM. Effectively, the present invention devises a hybrid of classical computation, classical communication and quantum communication. Quantum communication is basically utilized for key distribution. Comparable methods can be established for MAC (message authentication code) as well as for full message encryption similar to the SSL protocol.

For communication between the second host computer system (Acquirer host) and the front end terminal (POS terminal), the second host computer system is to be equipped with laser devices and the respective optical devices to communicate with the front end terminal. For this communication, the front end terminal (POS terminal) does not need to have laser devices.

According to the present invention, communication between the first and the second host computer systems is implemented as describe above. The only exception can reside in a special optical channel realized in the second host computer system (acquirer host) that enables the first host computer system (Issuer host) to communicate through a secure optical channel (IDC: inter device channel) with the front end terminal (POS terminal). This channel is to be used for communication between the Issuer host and the Card via the acquirer host and the POS terminal.

An inter device channel in accordance with the present invention (IDC: inter device channel) is provided in a financial network, where - as outlined above - often more than two entities are involved, and they share the whole or parts of the communications network. In the payment schemes explained above, two arbitrary entities within the network consisting of more than these two entities need to communicate secretly without disclosing their secrets using the other being part of that shared network. If, for example, the front end terminal (POS terminal) and the first host computer system (Issuer host) need to communicate while keeping their message secret even for the second host computer system (Acquirer host), it is in accordance with the present invention, to provide an optical channel formed by e.g. beam splitters between the two optical devices modules present in the Acquirer host. In this scenario, the IDC is a channel between two optical devices-sets, one is a transmitter and the other one is a receiver. The transmitter is used for secure communication with one entity (say A) and the receiver is used for secure communication with another entity (say B). I.e. this entity (say C) has two individual secure channels. When the entity A needs to communicate with the entity B, the entity C can offer its installed channel to A and B using this IDC. To lead single photons forming the message incoming from the C - A channel to the outgoing B - C channel, IDC consists of (i) a quantum channel ((near) vacuum, air or optical fiber), and (ii) two reflectors (mirrors) set in between the C - A channel and in between the B - C channel.

In a further embodiment, the user's PIN is to be verified by the card / token itself without communicating with the first host computer system (issuer host). In this case, the PIN is encrypted by the front end terminal (in fact by its QHSM) and transmitted to the card. A verification process executed in the card will verify whether the entered PIN matches with the PIN stored in the card. Also for this verification process, a QKD process comparable to the one described above is to be implemented. The card / token can share a key with the front end terminal's QHSM by QKD protocol. For this separate communication, the card / token is provided with quantum communication equipment as explained above, which typically consists of optical mirrors and polarization filters, splitters, beam shifters, etc. for which it is possible to be implemented into a card or token. Although it is possible, it is not necessary to set up an optical fiber channel between the front end terminal QHSM and the card / token. Rather, the quantum communication channel in this case is an air gap between the card / token and the front end terminal QHSM. Photons can travel straight between the front end terminal QHSM and the card / token. Interactions or collisions (scattering by molecules, absorption by molecules) between single photons and air molecules (typically Nitrogen or Oxygen) are negligible. Even if they happen, standard error-correction (information reconciliation and privacy amplification) procedures in the QKD protocol can deal with this. If the overhead of such error-correction must be minimized, then the free optical contact space between QHSM and the card / token can be brought into (near) vacuum.

Comparably, the first host computer system (issuer host) and the second host computer system (acquirer host) can communicate in a secure manner with initial quantum key distribution protocol set-up. In accordance with the one-time-pad cryptography concept, new keys are generated and utilized for every new message in order to keep the maximum security level. Thus, the quantum key distribution process is carried out for every request and response communication exchanged between the first host computer system (issuer host) and the second host computer system (acquirer host). Given, however, that the message data size for each financial transaction is fixed and relatively small, the quantum key distribution process does not add significantly to the data exchange overhead. In any case, the total data traffic is significantly reduced in comparison to conventional cryptography block sizes of some 100 bytes (and growing).

The communication between the first and the second host computer system (issuer host and acquirer host) can easily implement the QKD protocol, since fiber channels are widely available in backbone communication networks already today. The front end (POS) terminals - second computer system host (acquirer host) realization of the QKD protocol requires a QHSM and merchant site availability of fiber channels.

With the present invention, the financial industry (and possibly other industries) will be released from ongoing and suddenly upcoming requirements to update the key length or changing whole algorithms in their hardware and software systems not only at their hosts but also at remote merchant-sites. Furthermore, present invention will free the industry to maintain PKI and reduce communication overhead to a minimum level.

It is intended that the invention not be limited to the particular embodiment disclosed, but that the invention will include all embodiments falling within the scope of the appended claims.

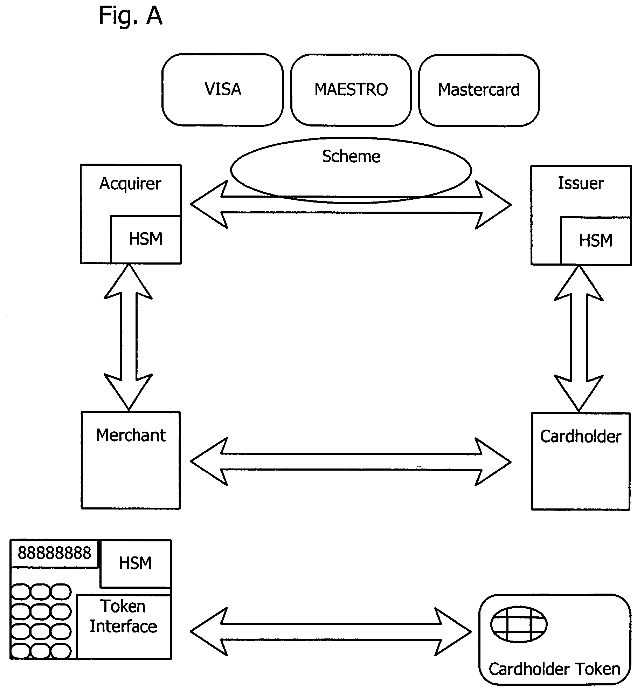

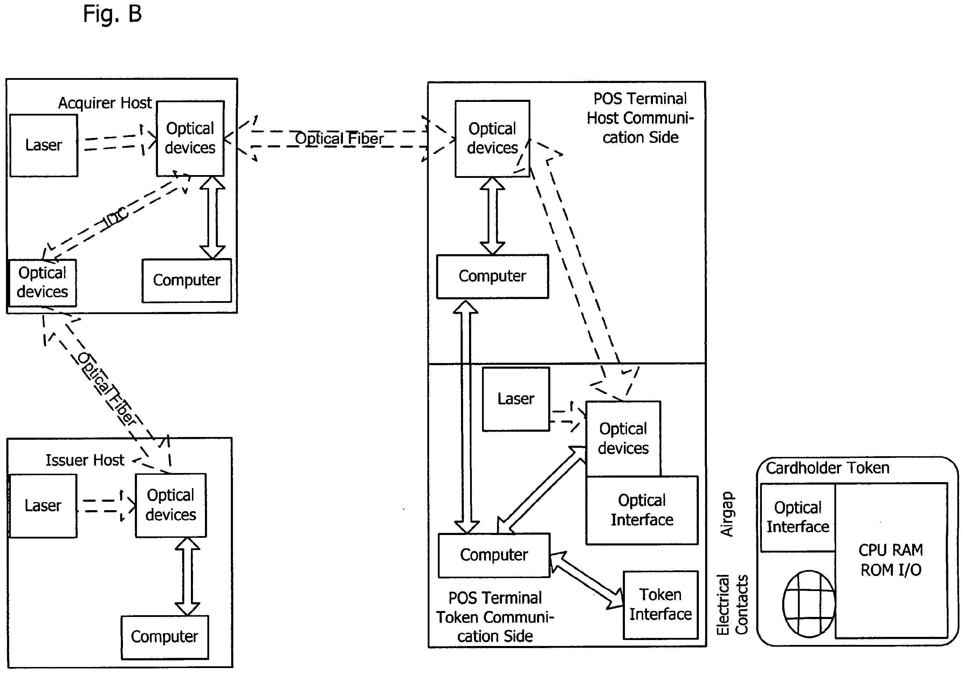

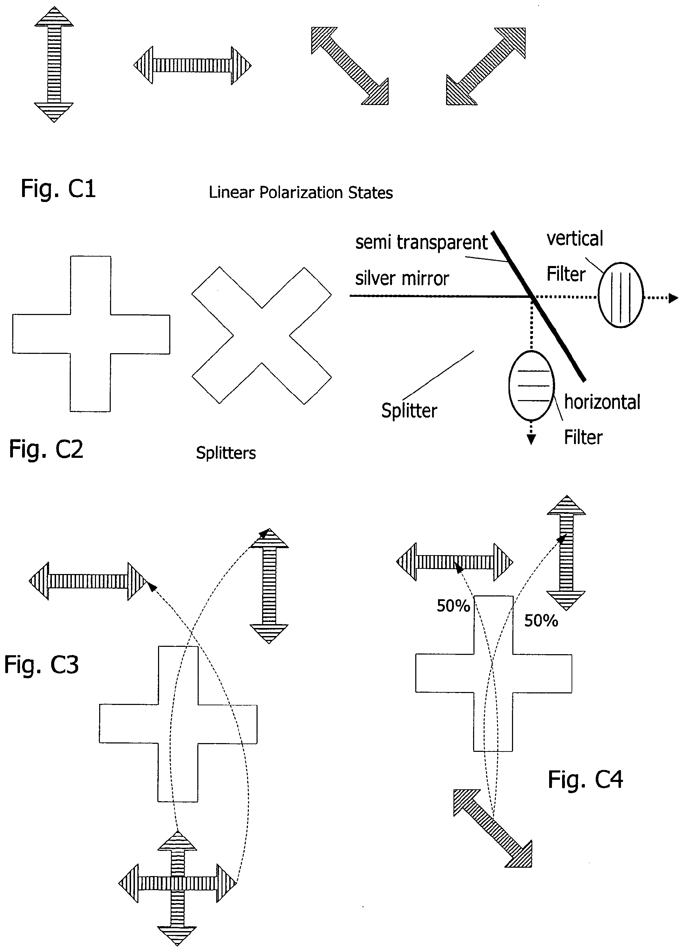

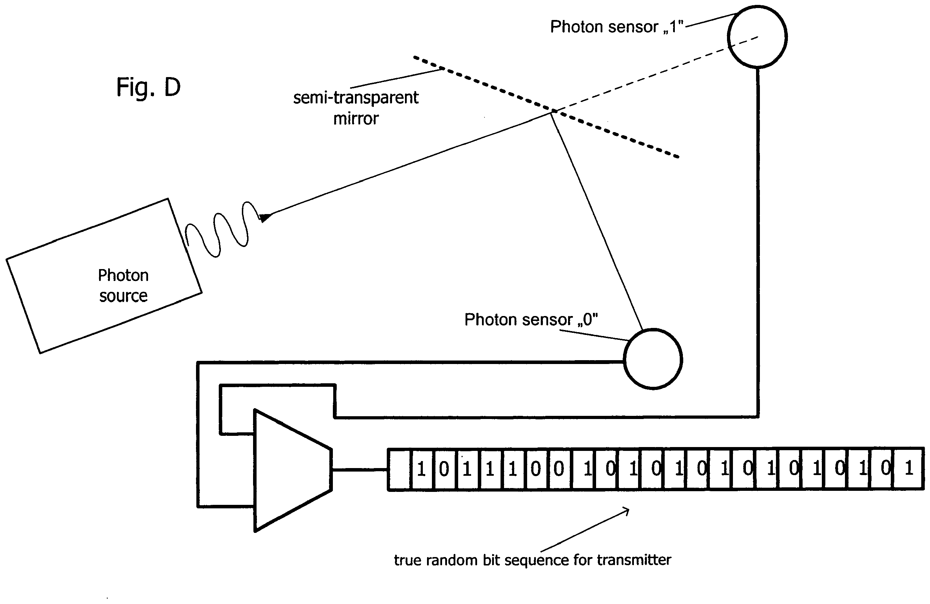

## Claims

1. A financial transaction network in which at least one first host computer system is at least temporarily connected to at least one second host computer system comprising one or more interlinked hosting platforms which are at least temporarily connected to at least one front end terminal, and
wherein the connections between the first host computer system and each second host computer system, and between each second host computer system and each front end terminal is one or more optical fiber channels,
wherein the communication data and/or the key data between the first host computer system and the second host computer system is encrypted utilizing a one time pad key and a quantum key distribution protocol,
wherein the communication data and/or the key data between the second host computer system and the front end terminal is encrypted utilizing a one time pad key and a quantum key distribution protocol,
wherein the second host computer system comprises an optical devices module for the communication between the second host computer system and the first host computer system and an optical devices module for the communication between the second host computer system and the front end terminal,
wherein for the communication between the front end terminal and the first host computer system an optical channel is provided between the two optical devices modules present in the second host computer system.

2. The financial transaction network defined in claim 1, wherein the first and the second host computer systems are a card issuer host and an acquirer host, and wherein the front end terminals are POS terminals to provide communication between a POS terminal and the card issuer host to effect a cashless electronic payment process.

3. The financial transaction network defined in claim 1 or 2, wherein the first and the second host computer systems comprise one or more interlinked computer hosting platforms.

4. The financial transaction network defined in any of the previous claims, wherein the quantum key distribution generates keys that have at least the same length as the plain text of the data exchanged in a respective financial transaction.

5. The financial transaction network defined in any of the previous claims, wherein the quantum key distribution uses a newly generated key for each financial transaction.

6. The financial transaction network defined in any of the previous claims, wherein the key is comprised of using true randomly generated digits.

7. The financial transaction network defined in any of the previous claims, wherein quantum hardware security modules are used in the first and second host computer systems and in the front end terminals, respectively, that include a quantum key distribution device, which generate random keys, and quantum communication devices using single photons to enable two parties to share actual one time key pads from previously generated random keys.

8. The financial transaction network defined in any of the previous claims, wherein the front end terminal and the second host computer system prepare the necessary one-time-pad key using the quantum key distribution protocol between them.

9. The financial transaction network defined in claim 4, wherein the front end terminal encrypts a PIN with the one time pad key using the generated key.

10. The financial transaction network defined in any of the previous claims, wherein the keys are generated by the quantum key distribution protocol and are communicated over the fiber channel between the front end terminal and the second host computer system.

11. The financial transaction network defined in any of the previous claims, wherein for the communication between the second host computer system and the front end terminal, the second host computer system is to be equipped with laser devices.

12. A method of carrying out a financial transaction in a network, comprising the steps of
connecting at least one first host computer system at least temporarily to at least one second host computer system comprising one or more interlinked hosting platforms connecting the second host computer system at least temporarily connected to at least one front end terminal, and wherein the connections between the first host computer system and each second host computer system, and between each second host computer system and each front end terminal is one or more optical fiber channels,
encrypting the communication data and/or the key data between the first host computer system and the second host computer system by utilizing a one time pad key and a quantum key distribution protocol,
encrypting the communication data and/or the key data between the second host computer system and the front end terminal by utilizing a one time pad key and a quantum key distribution protocol,
equipping the second host computer system with an optical devices module for the communication between the second host computer system and the first host computer system and an optical devices module for the communication between the second host computer system and the front end terminal, and
providing an optical channel between the two optical devices modules present in the second host computer system for the communication between the front end terminal and the first host computer system.

13. The method of carrying out a financial transaction in a network defined in the previous method claim, wherein the first and the second host computer systems are a card issuer host and an acquirer host, and wherein the front end terminals are POS terminals to provide communication between a POS terminal and the card issuer host to effect a cashless electronic payment process.

14. The method of carrying out a financial transaction in a network defined in any of the previous method claims, including the step of providing the first and the second host computer systems with one or more interlinked computer hosting platforms.

15. The method of carrying out a financial transaction in a network defined in any of the previous method claims, including the step of generating keys that have at least the same length as the plain text of the data exchanged in a respective financial transaction by the quantum key distribution.

16. The method of carrying out a financial transaction in a network defined in any of the previous method claims, including the step of using a newly generated key for each financial transaction by the quantum key distribution.

17. The method of carrying out a financial transaction in a network defined in any of the previous method claims, including the step of using true randomly generated digits for the keys.

18. The method of carrying out a financial transaction in a network defined in any of the previous method claims, including the step of using quantum hardware security modules in the first and second host computer systems and in the front end terminals, respectively, that include a quantum key distribution device, which generate random keys, and quantum communication devices using single photons to enable two parties to share actual one time key pads from previously generated random keys.

19. The method of carrying out a financial transaction in a network defined in any of the previous method claims, including the step of transmitting a PIN from the front end terminal to the second host computer system.

20. The method of carrying out a financial transaction in a network defined in any of the previous method claims, including the step of preparing the necessary one-time-pad key by the front end terminal and the second host computer using the quantum key distribution protocol between the front end terminal and the second host computer system.

21. The method of carrying out a financial transaction in a network defined in claim 16, including the step of encrypting the PIN with the one-time-pad key using the generated key in the front end terminal.

22. The method of carrying out a financial transaction in a network defined in any of the previous method claims, including the step of generating the keys by the quantum key distribution protocol and communicating them over the fiber channel between the front end terminal and the second host computer system.

23. The method of carrying out a financial transaction in a network defined in any of the previous method claims, including the steps of equipping the second host computer system with laser devices for the communication between the second host computer system and the front end terminal.

## Patentansprüche

1. Finanztransaktionsnetzwerk, in dem zumindest ein erstes Hostrechnersystem zumindest vorübergehend mit zumindest einem zweiten Hostrechnersystem verbunden ist, welches eine oder mehrere miteinander verbundene Hosting-Plattformen umfasst, die zumindest vorübergehend mit zumindest einem Front-End-Terminal verbunden ist, und
wobei die Verbindungen zwischen dem ersten Hostrechnersystem und jedem zweiten Hostrechnersystem, und zwischen jedem zweiten Hostrechnersystem und jedem Front-End-Terminal aus einem oder aus mehreren optischen Faserkanälen besteht,
wobei die Kommunikationsdaten und/oder die Schlüsseldaten zwischen dem ersten Hostrechnersystem und dem zweiten Hostrechnersystem unter Verwendung eines Einmalblockschlüssels und eines Protokolls zur Quantenschlüsselverteilung verschlüsselt werden,
wobei die Kommunikationsdaten und/oder die Schlüsseldaten zwischen dem zweiten Hostrechnersystem und dem Front-End-Terminal unter Verwendung eines Einmalblockschlüssels und eines Protokolls zur Quantenschlüsselverteilung verschlüsselt werden,
wobei das zweite Hostrechnersystem ein optisches Gerätemodul für die Kommunikation zwischen dem zweiten Hostrechnersystem und dem ersten Hostrechnersystem und ein optisches Gerätemodul für die Kommunikation zwischen dem zweiten Hostrechnersystem und dem Front-End-Terminal aufweist,
wobei für die Kommunikation zwischen dem Front-End-Terminal und dem ersten Hostrechnersystem ein optischer Kanal zwischen den zwei in dem zweiten Hostrechnersystem vorhandenen optischen Gerätemodulen vorgesehen ist.

2. Finanztransaktionsnetzwerk nach Anspruch 1, wobei die ersten und die zweiten Hostrechnersysteme ein Kartenaussteller-Host bzw. ein Erwerber-Host sind, und
wobei die Front-End-Terminals als POS-Terminals aussgebildet sind, um Kommunikation zwischen einem POS-Terminal und dem Kartenaussteller-Host vorzusehen, um einen bargeldlosen elektronischen Zahlungsvorgang zu bewirken.

3. Finanztransaktionsnetzwerk nach Anspruch 1 oder 2, wobei die ersten und die zweiten Hostrechnersysteme eine oder mehrere miteinander verbundene Hosting-Plattformen umfassen.

4. Finanztransaktionsnetzwerk nach einem der vorhergehenden Ansprüche, wobei die Quantenschlüsselverteilung Schlüssel erzeugt, die zumindest dieselbe Länge wie der Klartext der in einer jeweiligen Finanztransaktion ausgetauschten Daten aufweisen.

5. Finanztransaktionsnetzwerk nach einem der vorhergehenden Ansprüche, wobei die Quantenschlüsselverteilung für jede Finanztransaktion einen neu erzeugten Schlüssel verwendet.

6. Finanztransaktionsnetzwerk nach einem der vorhergehenden Ansprüche, wobei der Schlüssel unter Verwendung echt zufällig erzeugter Zahlen gebildet wird.

7. Finanztransaktionsnetzwerk nach einem der vorhergehenden Ansprüche, wobei in den ersten und zweiten Hostrechnersystemen und in den Front-End-Terminals jeweils Quanten-Hardwaresicherheitsmodule verwendet werden, die eine Vorrichtung zur Quantenschlüsselverteilung, die Zufallsschlüssel erzeugt, und Quantenkommunikationsvorrichtungen beinhaltet, die einzelne Photonen verwenden, um zwei Beteiligten das Teilen von aktuellen Einmalblockschlüsseln aus vorhergehend erzeugten Zufallsschlüsseln zu ermöglichen.

8. Finanztransaktionsnetzwerk nach einem der vorhergehenden Ansprüche, wobei das Front-End-Terminal und das zweite Hostrechnersystem den notwendigen Einmalblockschlüssel unter Verwendung des Protokolls zur Quantenschlüsselverteilung zwischen ihnen vorbereiten.

9. Finanztransaktionsnetzwerk nach Anspruch 4, wobei das Front-End-Terminal eine PIN mit dem Einmalblockschlüssel unter Verwendung des erzeugten Schlüssels verschlüsselt.

10. Finanztransaktionsnetzwerk nach einem der vorhergehenden Ansprüche, wobei die Schlüssel durch das Protokoll zur Quantenschlüsselverteilung erzeugt werden und über den Faserkanal zwischen dem Front-End-Terminal und dem zweiten Hostrechnersystem übertragen werden.

11. Finanztransaktionsnetzwerk nach einem der vorhergehenden Ansprüche, wobei das zweite Hostrechnersystem für die Kommunikation zwischen dem zweiten Hostrechnersystem und dem Front-End-Terminal mit Laservorrichtungen ausgestattet werden muss.

12. Verfahren zum Durchführen einer Finanztransaktion in einem Netzwerk umfassend die folgenden Schritte:
zumindest vorübergehendes Verbinden zumindest eines ersten Hostrechnersystems mit zumindest einem zweiten Hostrechnersystem, welches eine oder mehrere miteinander verbundene Hosting-Plattformen umfasst, die das zweite Hostrechnersystem zumindest vorübergehend mit zumindest einem Front-End-Terminal verbindet, und
wobei die Verbindungen zwischen dem ersten Hostrechnersystem und jedem zweiten Hostrechnersystem und zwischen jedem zweiten Hostrechnersystem und jedem Front-End-Terminal aus einem oder aus mehreren optischen Faserkanälen besteht,
Verschlüsseln der Kommunikationsdaten und/oder der Schlüsseldaten zwischen dem ersten Hostrechnersystem und dem zweiten Hostrechnersystem unter Verwendung eines Einmalblockschlüssels und eines Protokolls zur Quantenschlüsselverteilung,
Verschlüsseln der Kommunikationsdaten und/oder der Schlüsseldaten zwischen dem zweiten Hostrechnersystem und dem Front-End-Terminal unter Verwendung eines Einmalblockschlüssels und eines Protokolls zur Quantenschlüsselverteilung,
Ausstatten des zweiten Hostrechnersystems mit einem optischen Gerätemodul für die Kommunikation zwischen dem zweiten Hostrechnersystem und dem ersten Hostrechnersystem und einem optischen Gerätemodul für die Kommunikation zwischen dem zweiten Hostrechnersystem und dem Front-End-Terminal, und
Vorsehen eines optischen Kanals zwischen den zwei in dem zweiten Hostrechnersystem vorhandenen optischen Gerätemodulen für die Kommunikation zwischen dem Front-End-Terminal und dem ersten Hostrechnersystem.

13. Verfahren zum Durchführen einer Finanztransaktion in einem Netzwerk nach dem vorhergehenden Verfahrensanspruch, wobei die ersten und die zweiten Hostrechnersysteme ein Kartenaussteller-Host bzw. ein Erwerber-Host sind, und
wobei die Front-End-Terminals als POS-Terminals ausgebildet sind, um Kommunikation zwischen einem POS-Terminal und dem Kartenaussteller-Host vorzusehen, um einen bargeldlosen elektronischen Zahlungsvorgang zu bewirken.

14. Verfahren zum Durchführen einer Finanztransaktion in einem Netzwerk nach einem der vorhergehenden Verfahrensansprüche, beinhaltend den Schritt des Vorsehens einer oder mehrerer miteinander verbundener Hostrechner-Plattformen in den ersten und den zweiten Hostrechnersystemen.

15. Verfahren zum Durchführen einer Finanztransaktion in einem Netzwerk nach einem der vorhergehenden Verfahrensansprüche, beinhaltend den Schritt des Erzeugens von Schlüsseln durch die Quantenschlüsselverteilung, die zumindest dieselbe Länge wie der Klartext der in einer jeweiligen Finanztransaktion ausgetauschten Daten aufweisen.

16. Verfahren zum Durchführen einer Finanztransaktion in einem Netzwerk nach einem der vorhergehenden Verfahrensansprüche, beinhaltend den Schritt des Verwendens eines durch die Quantenschlüsselverteilung neu erzeugten Schlüssels für jede Finanztransaktion.

17. Verfahren zum Durchführen einer Finanztransaktion in einem Netzwerk nach einem der vorhergehenden Verfahrensansprüche, beinhaltend den Schritt des Verwendens echt zufällig erzeugter Zahlen für die Schlüssel.

18. Verfahren zum Durchführen einer Finanztransaktion in einem Netzwerk nach einem der vorhergehenden Verfahrensansprüche, beinhaltend den Schritt des jeweiligen Verwendens von Quanten-Hardwaresicherheitsmodulen in den ersten und zweiten Hostrechnersystemen und in den Front-End-Terminals, die eine Vorrichtung zur Quantenschlüsselverteilung, die Zufallsschlüssel erzeugt, und Quantenkommunikationsvorrichtungen beinhaltet, die einzelne Photonen verwenden, um zwei Beteiligten das Teilen von aktuellen Einmalblockschlüsseln aus vorhergehend erzeugten Zufallsschlüsseln zu ermöglichen.

19. Verfahren zum Durchführen einer Finanztransaktion in einem Netzwerk nach einem der vorhergehenden Verfahrensansprüche, beinhaltend den Schritt des Übertragens einer PIN von dem Front-End-Terminal an das zweite Hostrechnersystem.

20. Verfahren zum Durchführen einer Finanztransaktion in einem Netzwerk nach einem der vorhergehenden Verfahrensansprüche, beinhaltend den Schritt des Vorbereitens des notwendigen Einmalblockschlüssels durch das Front-End-Terminal und das zweiten Hostrechnersystem unter Verwendung des Protokolls zur Quantenschlüsselverteilung zwischen dem Front-End-Terminal und dem zweiten Hostrechnersystem.

21. Verfahren zum Durchführen einer Finanztransaktion in einem Netzwerk nach Anspruch 16, beinhaltend den Schritt des Verschlüsselns der PIN mit dem Einmalblockschlüssel unter Verwendung des erzeugten Schlüssels in dem Front-End-Terminal.

22. Verfahren zum Durchführen einer Finanztransaktion in einem Netzwerk nach einem der vorhergehenden Verfahrensansprüche, beinhaltend den Schritt des Erzeugens der Schlüssel durch das Protokoll zur Quantenschlüsselverteilung und deren Übertragens über den Faserkanal zwischen dem Front-End-Terminal und dem zweiten Hostrechnersystem.

23. Verfahren zum Durchführen einer Finanztransaktion in einem Netzwerk nach einem der vorhergehenden Verfahrensansprüche, beinhaltend den Schritt des Ausstattens des zweiten Hostrechnersystems mit Laservorrichtungen für die Kommunikation zwischen dem zweiten Hostrechnersystem und dem Front-End-Terminal.

## Revendications

1. Réseau de transactions financières dans lequel au moins un premier système d'ordinateur hôte est connecté au moins temporairement à au moins un deuxième système d'ordinateur hôte comprenant une ou plusieurs plateforme(s) d'hébergement interconnectée(s) qui est/sont connectée(s) au moins temporairement à au moins un terminal frontal, et
dans lequel les connexions entre le premier système d'ordinateur hôte et chaque deuxième système d'ordinateur hôte, et entre chaque deuxième système d'ordinateur hôte et chaque terminal frontal est un canal ou plusieurs canaux de fibres optiques,
dans lequel les données de communication et/ou les données de clés entre le premier système d'ordinateur hôte et le deuxième système d'ordinateur hôte sont chiffrées en utilisant une clé de carnet à usage unique et un protocole de distribution quantique de clés,
dans lequel les données de communication et/ou les données de clé entre le deuxième système d'ordinateur hôte et le terminal frontal sont chiffrées en utilisant une clé de carnet à usage unique et un protocole de distribution quantique de clés,
dans lequel le deuxième système d'ordinateur hôte comprend un module de dispositifs optiques pour la communication entre le deuxième système d'ordinateur hôte et le premier système d'ordinateur hôte et un module de dispositifs optiques pour la communication entre le deuxième système d'ordinateur hôte et le terminal frontal,
dans lequel pour la communication entre le terminal frontal et le premier système d'ordinateur hôte, un canal optique est prévu entre les deux modules de dispositifs optiques présents dans le deuxième système d'ordinateur hôte.

2. Réseau de transactions financières selon la revendication 1, dans lequel les premier et deuxième systèmes d'ordinateur hôte sont un hôte émetteur de carte et un hôte acquéreur, et dans lequel les terminaux frontaux sont des terminaux de POS pour fournir une communication entre un terminal de POS et l'hôte émetteur de carte pour effectuer une procédure de paiement électronique sans numéraire.

3. Réseau de transactions financières selon la revendication 1 ou 2, dans lequel les premier et deuxième systèmes d'ordinateur hôtes comprennent une ou plusieurs plateforme(s) informatique(s) d'hébergement interconnectée(s).

4. Réseau de transactions financières selon l'une quelconque des revendications précédentes, dans lequel la distribution quantique de clés génère des clés qui ont au moins la même longueur que le texte en clair des données échangées dans une transaction financière respective.

5. Réseau de transactions financières selon l'une quelconque des revendications précédentes, dans lequel la distribution quantique de clés utilise une clé nouvellement générée pour chaque transaction financière.

6. Réseau de transactions financières selon l'une quelconque des revendications précédentes, dans lequel la clé consiste à utiliser des chiffres générés de manière purement aléatoire.

7. Réseau de transactions financières selon l'une quelconque des revendications précédentes, dans lequel des modules de sécurité de matériel quantique sont utilisés dans les premier et deuxième systèmes d'ordinateur hôte et dans les terminaux frontaux, respectivement, qui comprennent un dispositif de distribution quantique de clés, qui génère des clés aléatoires, et des dispositifs de communication quantique utilisant des photons uniques pour permettre à deux parties de partager des carnets de clés à usage unique réels à partir de clés aléatoires générées préalablement.

8. Réseau de transactions financières selon l'une quelconque des revendications précédentes, dans lequel le terminal frontal et le deuxième système d'ordinateur hôte préparent la clé de carnet à usage unique nécessaire en utilisant le protocole de distribution quantique de clés entre eux.

9. Réseau de transactions financières selon la revendication 4, dans lequel le terminal frontal chiffre un PIN avec la clé de carnet à usage unique en utilisant la clé générée.

10. Réseau de transactions financières selon l'une quelconque des revendications précédentes, dans lequel les clés sont générées par le protocole de distribution quantique de clés et sont communiquées sur le canal de fibres entre le terminal frontal et le deuxième système d'ordinateur hôte.

11. Réseau de transactions financières selon l'une quelconque des revendications précédentes, dans lequel, pour la communication entre le deuxième système d'ordinateur hôte et le terminal frontal, le deuxième système d'ordinateur hôte doit être équipé de dispositifs laser.

12. Procédé d'exécution d'une transaction financière dans un réseau, comprenant les étapes de
connexion d'au moins un premier système d'ordinateur hôte au moins temporairement à au moins un deuxième système d'ordinateur hôte comprenant une ou plusieurs plateforme(s) d'hébergement interconnectée(s) connectant le deuxième système d'ordinateur hôte connecté au moins temporairement à au moins un terminal frontal, dans lequel les connexions entre le premier système d'ordinateur hôte et chaque deuxième système d'ordinateur hôte, et entre chaque deuxième système d'ordinateur hôte et chaque terminal frontal est un canal ou plusieurs canaux de fibres optiques,
chiffrement des données de communication et/ou des données de clés entre le premier système d'ordinateur hôte et le deuxième système d'ordinateur hôte en utilisant une clé de carnet à usage unique et un protocole de distribution quantique de clés,
chiffrement des données de communication et/ou des données de clés entre le deuxième système d'ordinateur hôte et le terminal frontal en utilisant une clé de carnet à usage unique et un protocole de distribution quantique de clés,
équipement du deuxième système d'ordinateur hôte d'un module de dispositifs optiques pour la communication entre le deuxième système d'ordinateur hôte et le premier système d'ordinateur hôte et d'un module de dispositifs optiques pour la communication entre le deuxième système d'ordinateur hôte et le terminal frontal, et
prévision d'un canal optique entre les deux modules de dispositifs optiques présents dans le deuxième système d'ordinateur hôte pour la communication entre le terminal frontal et le premier système d'ordinateur hôte.

13. Procédé d'exécution d'une transaction financière dans un réseau selon la revendication de procédé précédente, dans lequel les premier et deuxième systèmes d'ordinateur hôte sont un hôte émetteur de carte et un hôte acquéreur, et dans lequel les terminaux frontaux sont des terminaux de POS pour fournir une communication entre un terminal de POS et l'hôte émetteur de carte pour effectuer une procédure de paiement électronique sans numéraire.

14. Procédé d'exécution d'une transaction financière dans un réseau selon l'une quelconque des revendications de procédé précédentes, incluant l'étape de fourniture aux premier et deuxième systèmes d'ordinateur hôte, d'une ou plusieurs plateforme(s) informatique(s) d'hébergement interconnectée(s).

15. Procédé d'exécution d'une transaction financière dans un réseau selon l'une quelconque des revendications de procédé précédentes, incluant l'étape de génération de clés qui ont au moins la même longueur que le texte en clair des données échangées dans une transaction financière respective par la distribution quantique de clés.

16. Procédé d'exécution d'une transaction financière dans un réseau selon l'une quelconque des revendications de procédé précédentes, incluant l'étape d'utilisation d'une clé nouvellement générée pour chaque transaction financière par la distribution quantique de clés.

17. Procédé d'exécution d'une transaction financière dans un réseau selon l'une quelconque des revendications de procédé précédentes, incluant l'étape d'utilisation de chiffres générés de manière purement aléatoire pour les clés.

18. Procédé d'exécution d'une transaction financière dans un réseau selon l'une quelconque des revendications de procédé précédentes, incluant l'étape d'utilisation de modules de sécurité de matériel quantique dans les premier et deuxième systèmes d'ordinateur hôte et dans les terminaux frontaux, respectivement, qui comprennent un dispositif de distribution quantique de clés, qui génère des clés aléatoires, et des dispositifs de communication quantique utilisant des photons uniques pour permettre à deux parties de partager des carnets de clés à usage unique réels à partir de clés aléatoires générées préalablement.

19. Procédé d'exécution d'une transaction financière dans un réseau selon l'une quelconque des revendications de procédé précédentes, incluant l'étape de transmission d'un PIN du terminal frontal au deuxième système d'ordinateur hôte.

20. Procédé d'exécution d'une transaction financière dans un réseau selon l'une quelconque des revendications de procédé précédentes, incluant l'étape de préparation de la clé de carnet à usage unique nécessaire par le terminal frontal et le deuxième système d'ordinateur hôte en utilisant le protocole de distribution quantique de clés entre le terminal frontal et le deuxième système d'ordinateur hôte.

21. Procédé d'exécution d'une transaction financière dans un réseau selon la revendication 16, incluant l'étape de chiffrement du PIN avec la clé de carnet à usage unique en utilisant la clé générée dans le terminal frontal.

22. Procédé d'exécution d'une transaction financière dans un réseau selon l'une quelconque des revendications de procédé précédentes, incluant l'étape de génération des clés par le protocole de distribution quantique de clés et de communication de celles-ci sur le canal de fibres entre le terminal frontal et le deuxième système d'ordinateur hôte.

23. Procédé d'exécution d'une transaction financière dans un réseau selon l'une quelconque des revendications de procédé précédentes, incluant les étapes d'équipement du deuxième système d'ordinateur hôte de dispositifs laser pour la communication entre le deuxième système d'ordinateur hôte et le terminal frontal.
